# EUROPÄISCHE PATENTANMELDUNG

(11) **EP 3 657 283 A1**
(43) Veröffentlichungstag der Anmeldung: **27.05.2020**
(21) Anmeldenummer: 18207596.0
(22) Anmeldetag: 21.11.2018
(51) Int. Cl.: G05B 19/418, G05B 23/02

(54) **VERFAHREN ZUR BESTIMMUNG EINES FUSIONIERTEN DATENSATZES**

(71) Anmelder: Siemens Aktiengesellschaft, 80333 München (DE)
(72) Erfinder: Engelbrecht, Gerhard, 1050 Wien (AT); Li, Fei, 1220 Wien (AT); Schall, Daniel, 1220 Wien (AT)
(74) Vertreter: Maier, Daniel Oliver

(57) **Zusammenfassung**

Verfahren zur Bestimmung eines fusionierten Datensatzes (600), wobei erste und zweite Daten (111-115) erfasst werden, wobei eine erste und eine zweite Datenquelle (101-105) mit einem technischen Objekt (1) in Verbindung stehen und mittels der ersten und zweiten Daten (111-115) eine Eigenschaft des technischen Objekts (1) abgeleitet wird, und für die erste und zweite Datenquelle (101-105) jeweils ein, auf dem Prinzip des maschinellen Lernens beruhendes jeweiliges Daten-Modell (201-205) hinsichtlich des Betriebsverhalten des technischen Objekts (1) erzeugt und trainiert wird, und mittels dem jeweiligen Daten-Modell (201-205) und den ersten und zweiten Daten (111-115) jeweilige Modell-Daten (211-215) erzeugt werden, welche mit den jeweiligen ersten und zweiten Daten (111-115) verglichen werden und daraus jeweilige Analyse-Daten (311-315) gebildet werden, aus welchen Priorisierungs-Daten (401) hinsichtlich der Reihung der ersten und zweiten Daten (111-115) bestimmt werden, und aus den ersten und zweiten Daten (111-115) und den jeweiligen Priorisierungs-Daten (401) der fusionierte Datensatz (600) gebildet wird.

## Beschreibung

Die Erfindung betrifft ein Verfahren, eine Vorrichtung und ein System zur Bestimmung eines fusionierten Datensatzes.

Beim Betrieb technischer Objekte, wie beispielsweise Motoren, Pumpen, Produktionsanlagen für der Halbleiterfertigung, den Automobilbau oder für die Herstellung chemischer Produkte ist die Kontrolle der Prozesse eine sehr wichtige Aufgabe. Dazu werden häufig Sensoren eingesetzt, um betriebliche Parameter zu erfassen und auszuwerten, um bei Bedarf in den Betrieb einzugreifen oder Betriebsparameter nachzustellen. Die Sensoren können mittels eines SCADA-Systems ausgelesen und weiterverarbeitet werden.

Unter SCADA versteht man allgemein das Überwachen und Steuern technischer Prozesse mittels eines Computer-Systems, beispielsweise ein System zur Überwachung des Durchflusses, des Drucks oder der Temperatur eines Mediums in einer Leitung, der Drehzahl eines Motors oder zur Analyse von chemischen Zusammensetzungen während der Prozessierung.

Durch die immer komplexer werdenden Produktionssysteme wird oft auch die Anzahl an Sensoren immer größer. Die Sensoren selbst können dabei zusätzlich immer mehr Daten erzeugen. Eine nachfolgende Datenanalyse kann somit komplexer werden und es kann auch schwierig sein, relevante Daten in einer erzeugten Datenmenge zu erkennen.

Es ist Aufgabe der Erfindung ein Verfahren bereitzustellen, mittels welchem relevante Daten in einer Datenmenge leichter identifiziert werden können.

Die Aufgabe wird durch ein Verfahren eingangs genannter Art gelöst, bei welchem erste Daten von einer ersten Datenquelle erfasst werden, und zweite Daten von zumindest einer zweiten Datenquelle erfasst werden,
wobei die erste und die zumindest eine zweite Datenquelle mit einem technischen Objekt, welches für einen Betrieb vorgesehen ist, in Verbindung stehen und mittels der ersten und zweiten Daten zumindest eine technische Eigenschaft des technischen Objekts abgeleitet wird,
und für die erste und die zumindest eine zweite Datenquelle jeweils ein, auf dem Prinzip des maschinellen Lernens beruhendes jeweiliges Daten-Modell hinsichtlich des Betriebsverhalten des technischen Objekts erzeugt und trainiert wird,
und mittels dem jeweiligen Daten-Modell und den ersten und zweiten Daten jeweilige Modell-Daten erzeugt werden, welche mit den jeweiligen ersten und zweiten Daten verglichen werden und daraus jeweilige Analyse-Daten gebildet werden, aus welchen Priorisierungs-Daten hinsichtlich der Reihung der ersten und zweiten Daten bestimmt werden, und aus den ersten und zweiten Daten und den jeweiligen Priorisierungs-Daten der fusionierte Datensatz gebildet wird.

Dadurch wird erreicht, dass Daten priorisiert werden und eine nachfolgende Datenanalyse erleichtert wird. Durch die Verwendung des Datenmodells können gemessene Daten gegenüber erwarteten Daten aus dem Datenmodell verglichen werden. Somit können beispielsweise fehlerhafte Sensordaten gewichtet ausgewertet werden, indem sie in einem fusionierten Datensatz so gereiht werden, dass die Relevanz der einzelnen Sensordaten im Vergleich zum fusionierten Datensatz berücksichtigt wird.

In einer Weiterbildung der Erfindung ist es vorgesehen, dass ferner die Eigenschaften der ersten und der zumindest einen zweiten Datenquelle im jeweiligen Daten-Modell beim Erzeugen und Trainieren berücksichtigt werden. Dadurch wird erreicht, dass die Charakteristika der Sensoren selbst im Daten-Modell abgebildet werden. Somit kann beispielsweise die Alterung von Sensoren, welche die Datenquellen bilden, oder betriebliche Einflussgrößen auf die Sensoren, wie Temperatur oder Feuchtigkeit, im Daten-Modell berücksichtigt werden und die Genauigkeit bei der Bestimmung des fusionierte Datensatzes erhöht werden.

In einer Weiterbildung der Erfindung ist es vorgesehen, dass ferner für das System ein, auf dem Prinzip des maschinellen Lernens beruhendes System-Modell hinsichtlich des Betriebsverhalten des Systems erzeugt und trainiert wird, und das System-Modell bei der Bestimmung der Modell-Daten berücksichtigt wird. Dadurch wird erreicht, dass zusätzlich zu Daten-Modellen für Datenquellen, das heißt beispielsweise Sensoren, ein weiteres Modell für das technische Objekt berücksichtigt wird. Somit können nicht nur einzelne Datenquellen modelliert werden, sondern der gesamte Sensor-Verbund, sowie das Objekt selbst. Somit kann zusätzlich beispielsweise die Alterung des Objekts oder betriebliche Einflussgrößen auf das Objekt, wie Temperatur oder Feuchtigkeit, im Modell berücksichtigt werden und die Genauigkeit bei der Bestimmung des fusionierte Datensatzes weiter erhöht werden.

In einer bevorzugten Weiterbildung der Erfindung ist es vorgesehen, dass das jeweilige Daten-Modell ein erstes Teil-Modell für die erste Datenquelle und zumindest ein zweites Teil-Modell für die zumindest eine zweite Datenquelle beinhaltet, wobei mit Hilfe des ersten Teil-Modells unter Berücksichtigung der ersten und der zumindest einen zweiten Daten und des zumindest einen zweiten Teil-Modells die Modell-Daten erzeugt werden.

Dadurch ist eine aktuelle Datenquelle durch Mess-Daten gebildet, und die jeweiligen anderen Datenquellen sind durch Modell-Daten gebildet. Somit können beispielsweise unerwünschte Fehlergrößen, welche auf zwei Datenquellen wirken, getrennt voneinander analysiert werden. Dadurch ist eine verbesserte Analyse bei zumindest zwei fehlerbehafteten Daten von unerwünscht beeinflussten Datenquellen möglich. Dabei kann ein und derselbe Fehler auf zwei Datenquellen einwirken, wobei eine verbesserte Analyse der Fehlerursache möglich ist.

In einer Weiterbildung der Erfindung ist es vorgesehen, dass zumindest zwei zweite Datenquellen und zumindest zwei zweite Teil-Modelle umfasst sind, und die zumindest zwei zweite Teil-Modelle und das erste Teil-Modell miteinander in Wechselwirkung stehen. Dadurch wird erreicht, dass die Datenquellen nicht nur für sich in einem Daten-Modell abgebildet werden, sondern auch mit weiteren Datenquellen in Verbindung stehen und somit durch andere Datenquellen in Form von Referenzquellen im Modell berücksichtigt sind. So kommen beispielsweise Datenquellen durch den Einfluss auf andere Datenquellen analysiert werden und daraus Fehler erkannt werden.

In einer Weiterbildung der Erfindung ist es vorgesehen, dass das jeweilige Modell für maschinelles Lernen durch ein nicht-lineares Regressionsmodell beschrieben ist, vorzugsweise eine Support-Vector-Machine. Dadurch wird erreicht, dass die Daten-Modelle das Verhalten von den Datenquellen besonders genau abbilden können.

In einer Weiterbildung der Erfindung ist es vorgesehen, dass das technische Objekt mittels dem fusionierten Datensatz angesteuert wird. Dadurch wird eine effiziente Ansteuerung des technischen Objekts ermöglicht, da wichtige Informationen durch die Priorisierung im fusionierten Datensatz zuerst gereiht sind und folglich auf einfache Weise verarbeitet werden können.

Die Erfindung betrifft auch eine Vorrichtung, wobei ein Erfassungs-Modul mit einer ersten Datenquelle , welche dazu eingerichtet ist, erste Daten in Zusammenhang mit zumindest einer Eigenschaft eines technischen Objekts zu erfassen, und zumindest einer zweiten Datenquelle, welche dazu eingerichtet ist, zweite Daten in Zusammenhang mit zumindest einer Eigenschaft des technischen Objekts zu erfassen, und die Vorrichtung ferner ein Modell-Modul, ein Analyse-Modul, ein Priorisierungs-Modul und ein Informationsfusions-Modul aufweist,
wobei das Modell-Modul dazu eingerichtet ist, für die erste und die zumindest eine zweite Datenquelle jeweils ein, auf dem Prinzip des maschinellen Lernens beruhendes jeweiliges Daten-Modell hinsichtlich der zumindest einen Eigenschaft des technischen Objekts und hinsichtlich Eigenschaften der ersten und der zumindest einen zweiten Datenquelle zu erzeugen und zu trainieren, und mittels dem jeweiligen Daten-Modell und den ersten und zweiten Daten jeweilige Modell-Daten zu erzeugen,
und das Analyse-Modul dazu eingerichtet ist, die jeweilige Modell-Daten mit den jeweiligen ersten und zweiten Daten zu vergleichen und daraus jeweilige Analyse-Daten zu bilden,
und das Priorisierungs-Modul dazu eingerichtet ist, aus den Analyse-Daten Priorisierungs-Daten hinsichtlich der Reihung der ersten und zweiten Daten zu bestimmen,
und das Informationsfusions-Modul dazu eingerichtet ist, aus den ersten und zweiten Daten und den jeweiligen Priorisierungs-Daten einen Fusions-Datensatz zu bilden,
und die Vorrichtung dazu eingerichtet ist, das erfindungsgemäße Verfahren auszuführen.

Dadurch wird erreicht, dass analog zum vorher ausgeführten Verfahren Daten priorisiert werden und eine nachfolgende Datenanalyse erleichtert wird.

Es ist günstig, wenn die erste und/oder die zumindest eine zweite Datenquelle ein Sensor ist/sind und die ersten und/oder zweiten Daten ein Messwert ist/sind. Dadurch wird das technische Objekt anhand von realen Messwerten, welche von entsprechenden Sensoren erfasst und kann auf eine einfache Weise mittels des Fusions-Datensatzes während des Betriebs das Objekt analysiert werden.

Es ist besonders günstig, wenn das technische Objekt ein für den Betrieb vorgesehenes elektrisches Gerät, beispielsweise ein Motor, oder eine technische Anlage, beispielsweise eine Produktionsanlage, ist und die zumindest eine Eigenschaft des elektrischen Geräts oder der technischen Anlage ein Betriebsverhalten oder ein Betriebsparameter des elektrischen Geräts oder der technischen Anlage im Betrieb ist, beispielweise ein Betriebsstatus oder eine Betriebstemperatur. Dadurch können für das Gerät oder die Anlage Daten im Betrieb erfasst werden, und es kann auf eine einfache Weise mittels des Fusions-Datensatzes das Gerät oder die Anlage während des Betriebs analysiert werden.

In einer Weiterbildung der Erfindung ist es vorgesehen, dass die Vorrichtung dazu eingerichtet ist, das technische Objekt mittels dem fusionierten Datensatz anzusteuern.

Die Erfindung betrifft auch ein System, umfassend eine erfindungsgemäße Vorrichtung und ein technisches Objekt, wobei die erste und/oder die zumindest eine zweite Datenquelle dazu eingerichtet ist, den zumindest einen Betriebsparameter des technischen Objekts zu erfassen. Dadurch wird erreicht, dass das technische Objekt in dem entsprechenden Modell mit abgebildet ist, wodurch sich die Genauigkeit der Analyse des Fusions-Datensatzes erhöht.

In einer Weiterbildung der Erfindung ist es vorgesehen, dass die erste und die zumindest eine zweite Datenquelle einen redundanten Verbund von Datenquellen bildet. Dadurch wird erreicht, dass sich beispielsweise zwei redundante Sensoren wechselseitig kontrollieren können, indem eine physikalische Abhängigkeit der beiden Sensoren in dem entsprechenden Modell abgebildet ist, wodurch eine entsprechende Kontrolle möglich ist. Somit können zwei Sensordaten mit Modell-Daten verglichen werden, wobei die Modell-Daten einen Erwartungswert berücksichtigen. Folglich kann ein fehlerbehafteter Sensorwert ausgeschieden oder eine entsprechende Priorität vergeben werden. Dadurch erhöht sich die Genauigkeit der Analyse des Fusions-Datensatzes vorteilhaft.

Außerdem kann durch die Redundanz erreicht werden, dass im jeweiligen Daten-Modell für die beiden Sensoren eine Kontroll-Instanz gebildet ist, und in einem übergeordneten Kontroll-System keine Daten-Analyse erfolgen muss. Somit kann das übergeordnete Kontroll-System einfacher ausgeführt werden.

In einer Weiterbildung der Erfindung ist es vorgesehen, dass die erste und die zumindest eine zweite Datenquelle den zumindest einen Betriebsparameter mittels einer jeweils verschiedenen physikalischen Messgröße erfassen. Dadurch wird erreicht, dass beispielsweise systematische Fehler in Sensoren auf einfache Weise erkannt werden können. Durch die Berücksichtigung der entsprechenden Sensoreigenschaften im jeweiligen Daten-Modell können Messfehler besonders genau erfasst werden.

In einer Weiterbildung der Erfindung ist es vorgesehen, dass das technische Objekt dazu eingerichtet ist, mittels dem fusionierten Datensatz angesteuert zu werden.

Die Erfindung wird nachfolgend anhand eines in den beigeschlossenen Zeichnungen dargestellten Ausführungsbeispiels näher erläutert. In den Zeichnungen zeigt:
- Fig. 1: eine schematische Darstellung eines Motors mit angeordneten Sensoren,
- Fig. 2: ein Blockschaltbild eines Ausführungsbeispiels einer erfindungsgemäßen Vorrichtung mit Datenflüssen,
- Fig. 3: ein Ausführungsbeispiel eines erfindungsgemäßen Verfahrens,
- Fig. 4-8: Ausführungsbeispiele für Daten-Modelle zur Verwendung gemäß der Erfindung.

Die gezeigten Figuren stellen vereinfacht ein Ausführungsbeispiel eines erfindungsgemäßen Systems das, welches dazu vorgesehen ist, das erfindungsgemäße Verfahren auszuführen. Um die Verständlichkeit zu erhöhen wurde auf die Darstellung und Beschreibung weiterer Komponenten, wie Datenspeicher, Rechenvorrichtungen, Details zu Sensoren und Datenerfassungsvorrichtungen etc. verzichtet, wobei klar ist, dass diese Komponenten zur Ausführung des Verfahrens notwendig sein können.

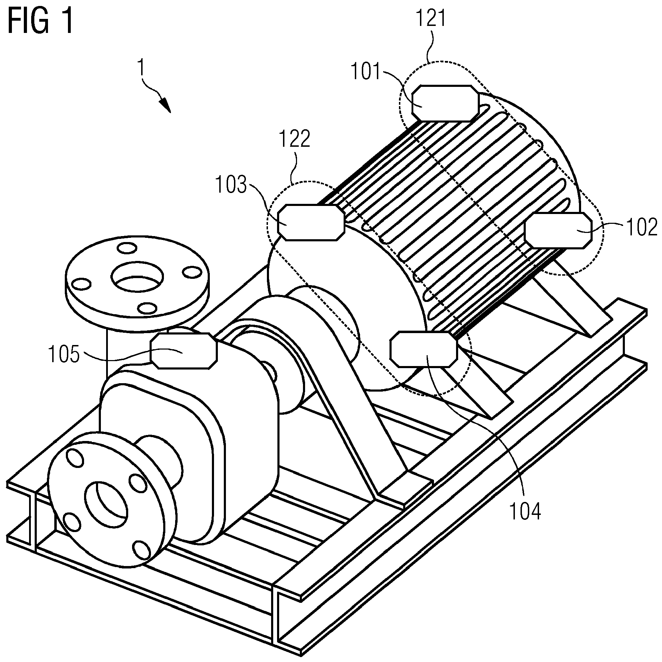

**Fig. 1** zeigt ein Ausführungsbeispiel für ein technisches Objekt 1 in Form eines Elektromotors mit Datenquellen 101-105 in Form von Sensoren, welche dazu eingerichtet sind, Daten 111-115 in Form von Messwerten zu erfassen.

Diesbezügliche Daten können beispielsweise messtechnisch durch eine Messeinrichtung, beispielsweise ein SCADA-System (Supervisory Control and Data Acquisition) in Form von Messdaten erfasst werden, und in weiterer Folge in einem Datenspeicher oder einer Datenbank gespeichert werden.

Unter SCADA versteht man allgemein das Überwachen und Steuern technischer Prozesse mittels eines Computer-Systems, beispielsweise ein System zur Überwachung des Durchflusses, des Drucks oder der Temperatur eines Mediums in einer Leitung.

Das technische Objekt 1 kann ein für den Betrieb vorgesehenes elektrisches Gerät, beispielsweise ein Motor, oder eine technische Anlage, beispielsweise eine Produktionsanlage sein.

Eine technische Eigenschaft des elektrischen Geräts oder der technischen Anlage, welche erfasst wird, kann ein Betriebsverhalten oder ein Betriebsparameter des elektrischen Geräts oder der technischen Anlage im Betrieb sein, beispielweise ein Betriebsstatus oder eine Betriebstemperatur.

Unter dem Betriebsverhalten wird in diesem Zusammenhang beispielsweise eine gewünschte Motordrehzahl oder ein gewünschtes Drehmoment innerhalb eines vorgegebenen Temperaturbereichs am Gerät 1 verstanden. In anderen Ausführungsbeispielen kann unter dem Betriebsverhalten das Erreichen von vorgegebenen Prozessparametern innerhalb eines vorgegebenen Durchsatzes an produzierten Gütern verstanden werden.

Ein Prozessparameter kann beispielsweise die Genauigkeit bei der Bestückung von elektronischen Bauteilen auf einem Schaltungsträger sein.

Ein Prozessparameter kann beispielsweise auch die Konsistenz bei der Herstellung einer chemischen Emulsion sein.

Die Datenquellen 101-105 sind entsprechend angeordnet und dazu eingerichtet, um einen oder mehrere Betriebsparameter des technischen Objekts 1 mittels einer Vorrichtung 10 zu erfassen.

Die Datenquellen 101-105 sind ferner so angeordnet, dass sie einen redundanten Verbund 121, 122 von Datenquellen bilden.

Die Datenquellen 101-105 können dabei den Betriebsparameter mittels einer jeweils verschiedenen physikalischen Messgröße erfassen.

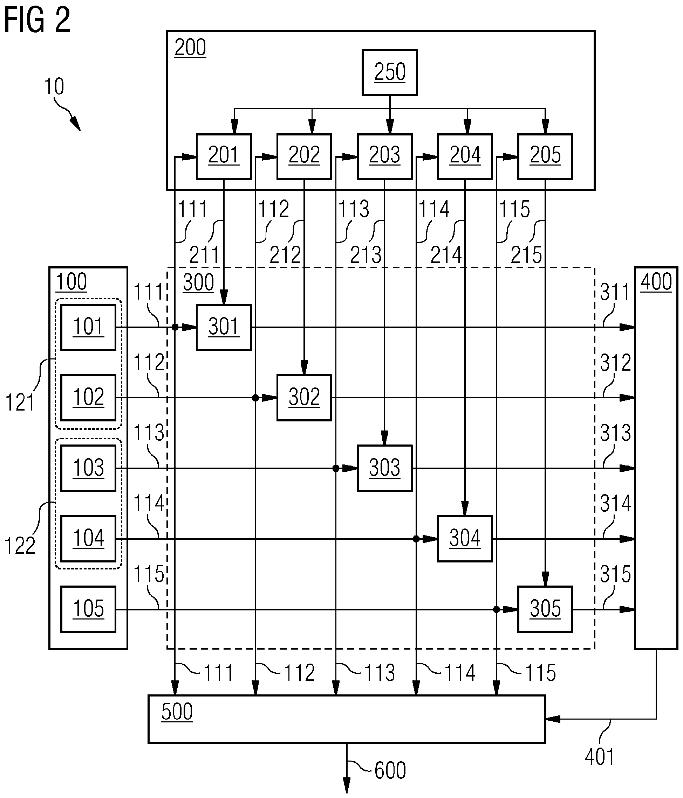

**Fig. 2** zeigt die erfindungsgemäße Vorrichtung 10, welche zur Bestimmung eines fusionierten Datensatzes 600 vorgesehen ist.

Die Vorrichtung 10 umfasst ein Erfassungs-Modul 100 mit der ersten Datenquelle 101, welche dazu eingerichtet ist, erste Daten 111 in Zusammenhang mit einer technischen Eigenschaft des technischen Objekts 1 zu erfassen.

Die Vorrichtung 10 umfasst ferner vier weitere zweite Datenquellen 102-105, welche jeweils dazu eingerichtet sind, zweite Daten 112-115 in Zusammenhang mit der Eigenschaft des technischen Objekts 1 zu erfassen.

Die technische Eigenschaft kann beispielsweise die Betriebstemperatur des Elektromotors 1 bei einem vorgegebenen Drehmoment im Betrieb sein. Das Drehmoment kann durch Dehnungssensoren in Form von Oberflächenwellen-Elementen erfasst werden, welche gleichzeitig Temperaturinformationen liefern.

Die Vorrichtung 10 weist ferner ein Modell-Modul 200, ein Analyse-Modul 300, ein Priorisierungs-Modul 400 und ein Informationsfusions-Modul 500 auf.

Das Modell-Modul 200 ist dazu eingerichtet, für die erste und die weiteren zweiten Datenquellen 101-105 jeweils ein, auf dem Prinzip des maschinellen Lernens beruhendes jeweiliges Daten-Modell 201-205 hinsichtlich der Eigenschaft des Geräts 1 und hinsichtlich Eigenschaften der ersten und der weiteren zweiten Datenquelle 101-105 zu erzeugen und zu trainieren, und mittels dem jeweiligen Daten-Modell 201-205 und den ersten und zweiten Daten 111-115 jeweilige Modell-Daten 211-215 zu erzeugen.

Die Daten-Modelle 201-205 können beispielsweise in einem Speicher der Vorrichtung 10 gespeichert sein. Die Vorrichtung 10 umfasst ferner eine Recheneinheit, die dazu vorgesehen ist, die Verfahrensschritte auszuführen. Der Speicher und die Recheneinheit sind in Fig. 2 nicht gezeigt. Es ist klar, dass die Module 200, 300, 400 und 500 nicht getrennte Einheiten sein müssen, sondern nur eine logische Unterteilung erlauben, um das Verfahren übersichtlicher darzustellen.

Das Analyse-Modul 300 ist dazu eingerichtet, die jeweiligen Modell-Daten 211-215 mit den jeweiligen ersten und zweiten Daten 111-115 zu vergleichen und daraus jeweilige Analyse-Daten 311-315 zu bilden.

Der Vergleich kann durch einen direkten Vergleich von Messwerten mit Modell-Werten erfolgen, beispielsweise durch Differenzbildung. Es sind jedoch auch komplexerer Zusammenhänge für Vergleiche, wie mittels statistischer Verfahren, beispielsweise Mittelwertbildung oder prädiktive Verfahren, möglich.

Das Priorisierungs-Modul 400 ist dazu eingerichtet, aus den Analyse-Daten 311-315 Priorisierungs-Daten 401 hinsichtlich der Reihung der ersten und zweiten Daten 111-115 zu bestimmen.

Eine Priorisierung von Daten kann beispielsweise dazu dienen, um die Reihenfolge von Daten festzulegen. Aus der Reihenfolge kann etwa ein übergeordnetes System erkennen, welche Messgrößen von höherer Relevanz für eine genaue Analyse sind, als Messgrößen, welche nur geringfügig von Erwartungswerten abweichen, beziehungsweise durch die Vorrichtung 10 mittels redundanter Daten bereist geprüft werden.

Das Informationsfusions-Modul 500 ist dazu eingerichtet, aus den ersten und zweiten Daten 111-115 und den jeweiligen Priorisierungs-Daten 401 einen Fusions-Datensatz 600 zu bilden.

Der Fusions-Datensatz 600 kann beispielsweise eine priorisierte Liste von Messdaten sein, wobei die Liste nicht alle erfassten Messdaten beinhalten muss. Somit kann die Liste auch nur eine Teilmenge aller Messdaten sein.

Die Vorrichtung kann auch dazu eingerichtet sein, das Gerät 1 mittels dem fusionierten Datensatz 600 durch eine entsprechende Parametrierung eines geeigneten Ansteuermittels, beispielsweise eine Treiber- bzw. Ansteuerungselektronik für den Motor 1, anzusteuern. Dieser Aspekt ist in den Figuren nicht gezeigt.

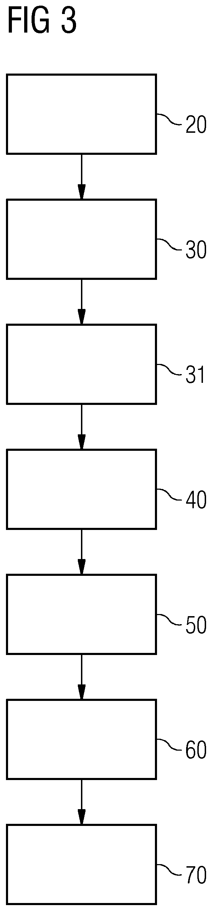

**Fig. 3** zeigt ein Ausführungsbeispiel für das erfindungsgemäße Verfahren zur Bestimmung eines fusionierten Datensatzes 600 mit den Verfahrensschritten 20-70, welches von der Vorrichtung 10 der Fig. 2 ausführbar ist.
- Erfassen 20 von ersten Daten 111 von einer ersten Datenquelle 101, und Erfassen von zweiten Daten 112-115 von weiteren zweiten Datenquellen 102-105, wobei die erste und die weiteren zweiten Datenquellen 101-105 mit einem technischen Objekt 1, welches für einen Betrieb vorgesehen ist, in Verbindung stehen und mittels der ersten und zweiten Daten 111-115 eine Eigenschaft des technischen Objekts 1 abgeleitet wird,
- Erzeugen 30 und Trainieren für die erste und die weiteren zweiten Datenquellen 101-105 jeweils eines, auf dem Prinzip des maschinellen Lernens beruhendes jeweiliges Daten-Modell 201-205 hinsichtlich des Betriebsverhalten des technischen Objekts 1 und der Eigenschaften der ersten und der weiteren zweiten Datenquellen 101-105,
- Erzeugen 31 und Trainieren für das System 10 ein, auf dem Prinzip des maschinellen Lernens beruhendes System-Modell 250 hinsichtlich des Betriebsverhalten des Systems 10,
- Erzeugen 40 jeweiliger Modell-Daten 211-215 mittels dem System-Modell 250, dem jeweiligen Daten-Modell 201-205 und den ersten und zweiten Daten 111-115,
- Vergleichen 50 der Modell-Daten 211-215 mit den jeweiligen ersten und zweiten Daten 111-115, woraus anschließend jeweilige Analyse-Daten 311-315 gebildet werden,
- Bestimmen 60 von Priorisierungs-Daten 401 hinsichtlich der Reihung der ersten und zweiten Daten 111-115 aus den Analyse-Daten 311-315,
- Bilden 70 des fusionierten Datensatzes 600 aus den ersten und zweiten Daten 111-115 und den jeweiligen Priorisierungs-Daten 401.

In diesem Beispiel beinhaltet das jeweilige Daten-Modell 201-205 ein erstes Teil-Modell 221-225 für die erste Datenquelle 101 und vier weitere zweite Teil-Modelle 231-235 für die weiteren zweiten Datenquellen 102-105.

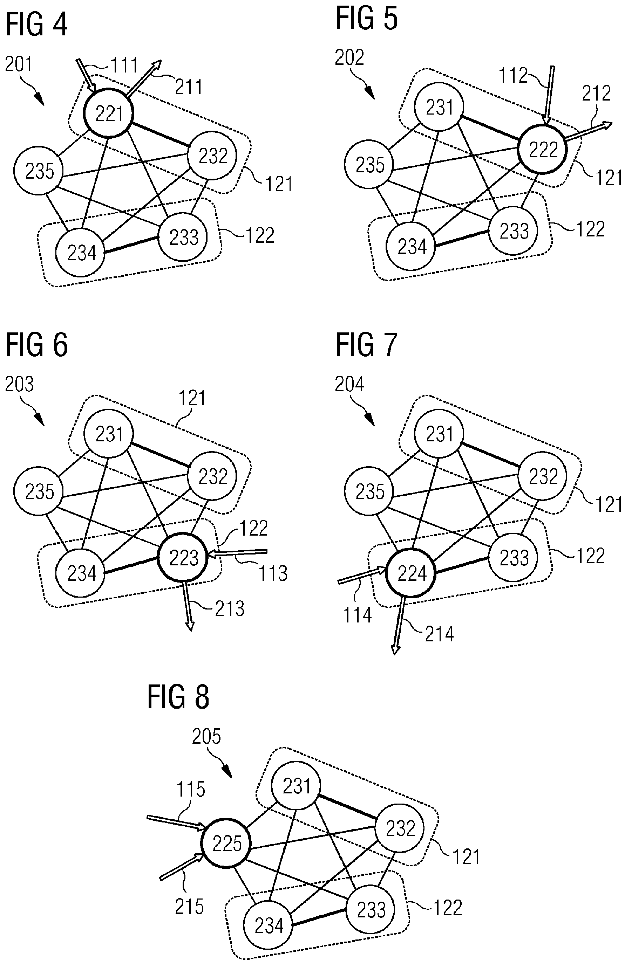

**Fig. 4 bis 8** zeigen Beispiele für die Daten-Modelle 201-205, welche jeweils ein erstes Teil-Modell 221-225 für die erste Datenquelle 101 und ein zweites Teil-Modell 231-235 für die zweite Datenquelle 102-105 aufweisen.

In **Fig. 4** ist das Daten-Modell 201 dargestellt, welches das erste Teil-Modell 221 umfasst.

Das erste Teil-Modell 221 bezieht erste Daten 111 von der ersten Datenquelle 101 und liefert Modell-Daten 211.

Mit Hilfe des ersten Teil-Modells 221 können unter Berücksichtigung der ersten Daten 111 und der zweiten Teil-Modelle 232-235 die Modell-Daten 211 erzeugt werden.

Das Daten-Modell 201 weist ferner zweite Teil-Modelle 232-235 auf, welche die zweiten Datenquellen 102-105 abbilden. Für die zweiten Datenquellen 102-105 werden Modell-Daten gebildet. Somit werden in den zweiten Teil-Modellen 232-235 beispielsweise Daten prognostiziert und nicht die aktuellen Messdaten der entsprechenden zweiten Datenquellen berücksichtigt.

Mit anderen Worten sind weitere zweite Datenquellen 102-105 und weitere zweite Teil-Modelle 232-235 umfasst.

In Fig. 4 sind die Verknüpfungen 121, 122 zwischen den Datenquellen 221 und 232 beziehungsweise zwischen den Datenquellen 233 und 234 erkennbar, was einen Hinweis auf die redundante Auslegung der Datenquellen gibt. Somit stehen die weiteren zweiten Teil-Modelle 232-235 und das erste Teil-Modell 221 miteinander in Wechselwirkung.

Das jeweilige Modell 201-205, 221-225, 231-235 für maschinelles Lernen ist ein nicht-lineares Regressionsmodell, vorzugsweise eine Support-Vector-Machine.

Für die **Fig. 5 bis 8** gilt analog die Beschreibung der Fig. 4.

Die Erfindung ist nicht auf die gezeigten Ausführungsformen beschränkt, sondern umfasst alle Varianten, Kombinationen und Anpassungen, welche in den Schutzumfang der beigefügten Ansprüche fallen.

### Bezugszeichenliste:

- 1: Motor, technisches Objekt
- 10: Vorrichtung
- 20-70: Verfahrensschritte:
- 20: Erfassen von Daten
- 30: Erzeugen und Trainieren jeweils eines Daten-Modells
- 31: Erzeugen und Trainieren eines SystemModells
- 40: Erzeugen von Modell-Daten
- 50: Vergleichen
- 60: Bestimmen von Priorisierungs-Daten
- 70: Bilden des fusionierten Datensatzes
- 100: Erfassungs-Modul, Sensorsystem, Datensystem
- 101-105: Erfassungs-Einheit, Sensor, Datenquelle
- 111-115: erfasste Daten
- 121, 122: Verknüpfung von Sensoren
- 200: Modell-Modul
- 201-205: Sensor-Modell, Daten-Modell
- 211-215: Modell-Daten
- 221-225, 231-235: Teil-Modell
- 250: System-Modell
- 300: Analyse-Modul
- 301-305: Analyse-Vorrichtung
- 311-315: Analyse-Daten
- 400: Priorisierungs-Modul
- 401: Priorisierungs-Daten
- 500: Informationsfusions-Modul
- 510: Fusions-Modell
- 600: fusionierter Datensatz

## Patentansprüche

1. Verfahren zur Bestimmung eines fusionierten Datensatzes (600), **dadurch gekennzeichnet, dass** erste Daten (111) von einer ersten Datenquelle (101) erfasst werden, und zweite Daten (112-115) von zumindest einer zweiten Datenquelle (102-105) erfasst werden,
wobei die erste und die zumindest eine zweite Datenquelle (101-105) mit einem technischen Objekt (1), welches für einen Betrieb vorgesehen ist, in Verbindung stehen und mittels der ersten und zweiten Daten (111-115) zumindest eine Eigenschaft des technischen Objekts (1) abgeleitet wird,
und für die erste und die zumindest eine zweite Datenquelle (101-105) jeweils ein, auf dem Prinzip des maschinellen Lernens beruhendes jeweiliges Daten-Modell (201-205) hinsichtlich des Betriebsverhalten des technischen Objekts (1) erzeugt und trainiert wird,
und mittels dem jeweiligen Daten-Modell (201-205) und den ersten und zweiten Daten (111-115) jeweilige Modell-Daten (211-215) erzeugt werden, welche mit den jeweiligen ersten und zweiten Daten (111-115) verglichen werden und daraus jeweilige Analyse-Daten (311-315) gebildet werden, aus welchen Priorisierungs-Daten (401) hinsichtlich der Reihung der ersten und zweiten Daten (111-115) bestimmt werden, und aus den ersten und zweiten Daten (111-115) und den jeweiligen Priorisierungs-Daten (401) der fusionierte Datensatz (600) gebildet wird.

2. Verfahren nach dem vorhergehenden Anspruch, wobei ferner die Eigenschaften der ersten und der zumindest einen zweiten Datenquelle (101-105) im jeweiligen Daten-Modell (201-205) beim Erzeugen und Trainieren berücksichtigt werden.

3. Verfahren nach einem der vorhergehenden Ansprüche, wobei ferner für das System (10) ein, auf dem Prinzip des maschinellen Lernens beruhendes System-Modell (250) hinsichtlich des Betriebsverhalten des Systems (10) erzeugt und trainiert wird, und das System-Modell (250) bei der Bestimmung der Modell-Daten (211-215) berücksichtigt wird.

4. Verfahren nach einem der vorhergehenden Ansprüche, wobei das jeweilige Daten-Modell (201-205) ein erstes Teil-Modell (221-225) für die erste Datenquelle (101) und zumindest ein zweites Teil-Modell (231-235) für die zumindest eine zweite Datenquelle (102-105) beinhaltet, wobei mit Hilfe des ersten Teil-Modells (221-225) unter Berücksichtigung der ersten und der zumindest einen zweiten Daten (111-115) und des zumindest einen zweiten Teil-Modells (231-235) die Modell-Daten (211-215) erzeugt werden.

5. Verfahren nach dem vorhergehenden Anspruch, wobei zumindest zwei zweite Datenquellen (102-105) und zumindest zwei zweite Teil-Modelle (231-235) umfasst sind, und die zumindest zwei zweite Teil-Modelle (231-235) und das erste Teil-Modell (221-225) miteinander in Wechselwirkung stehen.

6. Verfahren nach einem der vorhergehenden Ansprüche, wobei das jeweilige Modell (201-205, 221-225, 231-235) für maschinelles Lernen durch ein nicht-lineares Regressionsmodell beschrieben ist, vorzugsweise eine Support-Vector-Machine.

7. Verfahren nach einem der vorhergehenden Ansprüche, wobei das technische Objekt (1) mittels dem fusionierten Datensatz (600) angesteuert wird.

8. Vorrichtung (10) zur Bestimmung eines fusionierten Datensatzes (600), **gekennzeichnet durch**
ein Erfassungs-Modul (100) mit einer ersten Datenquelle (101), welche dazu eingerichtet ist, erste Daten (111) in Zusammenhang mit zumindest einer Eigenschaft eines technischen Objekts (1) zu erfassen, und zumindest einer zweiten Datenquelle (102-105), welche dazu eingerichtet ist, zweite Daten (112-115) in Zusammenhang mit zumindest einer Eigenschaft des technischen Objekts (1) zu erfassen, und
die Vorrichtung ferner ein Modell-Modul (200), ein Analyse-Modul (300), ein Priorisierungs-Modul (400) und ein Informationsfusions-Modul (500) aufweist,
wobei das Modell-Modul (200) dazu eingerichtet ist, für die erste und die zumindest eine zweite Datenquelle (101-105) jeweils ein, auf dem Prinzip des maschinellen Lernens beruhendes jeweiliges Daten-Modell (201-205) hinsichtlich der zumindest einen Eigenschaft des technischen Objekts (1) und hinsichtlich Eigenschaften der ersten und der zumindest einen zweiten Datenquelle (101-105) zu erzeugen und zu trainieren, und mittels dem jeweiligen Daten-Modell (201-205) und den ersten und zweiten Daten (111-115) jeweilige Modell-Daten (211-215) zu erzeugen,
und das Analyse-Modul (300) dazu eingerichtet ist, die jeweilige Modell-Daten (211-215) mit den jeweiligen ersten und zweiten Daten (111-115) zu vergleichen und daraus jeweilige Analyse-Daten (311-315) zu bilden,
und das Priorisierungs-Modul (400) dazu eingerichtet ist, aus den Analyse-Daten (311-315) Priorisierungs-Daten (401) hinsichtlich der Reihung der ersten und zweiten Daten (111-115) zu bestimmen,
und das Informationsfusions-Modul (500) dazu eingerichtet ist, aus den ersten und zweiten Daten (111-115) und den jeweiligen Priorisierungs-Daten (401) einen Fusions-Datensatz (600) zu bilden,
und die Vorrichtung (10) dazu eingerichtet ist, das Verfahren nach einem der vorhergehenden Ansprüche auszuführen.

9. Vorrichtung (10) nach dem vorhergehenden Anspruch, wobei die erste und/oder die zumindest eine zweite Datenquelle (101-105) ein Sensor ist/sind und die ersten und/oder zweiten Daten (111-115) ein Messwert ist/sind.

10. Vorrichtung (10) nach einem der Ansprüche 8 oder 9, wobei das technische Objekt (1) ein für den Betrieb vorgesehenes elektrisches Gerät, beispielsweise ein Motor, oder eine technische Anlage, beispielsweise eine Produktionsanlage, ist und die zumindest eine Eigenschaft des elektrischen Geräts oder der technischen Anlage ein Betriebsverhalten oder ein Betriebsparameter des elektrischen Geräts oder der technischen Anlage im Betrieb ist, beispielweise ein Betriebsstatus oder eine Betriebstemperatur.

11. Vorrichtung nach einem der Ansprüche 8 bis 10, wobei die Vorrichtung dazu eingerichtet ist, das technische Objekt (1) mittels dem fusionierten Datensatz (600) anzusteuern.

12. System zur Bestimmung eines fusionierten Datensatzes (600), umfassend eine Vorrichtung (10) nach einem der Ansprüche 8 bis 11 und ein technisches Objekt (1), wobei die erste und/oder die zumindest eine zweite Datenquelle (101-105) dazu eingerichtet ist, den zumindest einen Betriebsparameter des technischen Objekts (1) zu erfassen.

13. System nach dem vorhergehenden Anspruch, wobei die erste und die zumindest eine zweite Datenquelle (101-105) einen redundanten Verbund (121, 122) von Datenquellen bildet.

14. System nach dem vorhergehenden Anspruch, wobei die erste und die zumindest eine zweite Datenquelle (101-105) den zumindest einen Betriebsparameter mittels einer jeweils verschiedenen physikalischen Messgröße erfassen.

15. System nach den Ansprüchen 12 bis 14, wobei das technische Objekt (1) dazu eingerichtet ist, mittels dem fusionierten Datensatz (600) angesteuert zu werden.
